Europäisches Patentamt

European Patent Office

Office européen des brevets

(11) Veröffentlichungsnummer: **0 158 123**
A2

(19)

(12) **EUROPÄISCHE PATENTANMELDUNG**

(21) Anmeldenummer: 85102599.9

(22) Anmeldetag: 07.03.85

(51) Int. Cl.⁴: **B 62 D 53/08**

(30) Priorität: 12.04.84 CH 1832/84

(43) Veröffentlichungstag der Anmeldung:
16.10.85 Patentblatt 85/42

(84) Benannte Vertragsstaaten:
BE CH DE FR GB IT LI NL SE

(71) Anmelder: GEORG FISCHER AKTIENGESELLSCHAFT
Mühlentalstrasse 105
CH-8201 Schaffhausen(CH)

(72) Erfinder: Kopp, Hans
Dorfstrasse 445
CH-8448 Uhwiesen(CH)

(72) Erfinder: Jakob, Lothar
Schrotzburgstrasse 11
D-7702 Gottmadingen(DE)

(54) Sattelkupplung.

(57) Es wird eine Sattelkupplung mit einer Kupplungsplatte vorgeschlagen, die an ihrer Unterseite zu beiden Seiten je in einer Ausnehmung zur Aufnahme des Kopfes eines Lagerbockes diesen umschliesst, und die an ihrer Oberfläche ein Schmiersystem aufweist. In jenem Schmierbereich, der sich über dem Scheitel des Kopfes des Lagerbockes befindet, ist eine Oeffnung 6 vorgesehen. Diese Oeffnung sorgt für die direkte Zuführung des Schmiermittels zum Kopf des Lagerbockes.

Der Vorteil dieser Anordnung besteht darin, dass auf zusätzliche Schmierleitungen verzichtet werden kann. Dadurch entfällt der zusätzliche Aufwand für Wartung und Unterhaltungsarbeiten.

Fig 2.

EP 0 158 123 A2

-ℨ- 1

GEORG FISCHER AKTIENGESELLSCHAFT,     8201 Schaffhausen

2429/FzT / 27.2.1985 / MS-ug

Sattelkupplung

Die vorliegende Erfindung betrifft eine Sattelkupplung mit
einer Kupplungsplatte, die an ihrer Unterseite zu beiden
Seiten je eine Ausnehmung, die zur Aufnahme des Kopfes eines
Lagerbockes bestimmt ist, aufweist und in deren Oberfläche
ein Schmiersystem vorsehbar ist.

Es ist bekannt, in der Oberfläche einer Kupplungsplatte
einer Sattelkupplung Schmiernuten anzuordnen, die über
Schmiermittelzuflussbohrungen gespeist werden. Die auf
diese Weise gewährleistete Schmierung ist notwendig,
um den Verschleiss in den Bereichen hoher Flächenpressung
zwischen der Auflagefläche der Kupplungsplatte und der
Gegenplatte herabzusetzen. In den meisten Sattelkupplungsanordnungen sind unabhängig von dieser Auflageflächenschmierung zusätzlich Schmierleitungen vorgesehen, die die
Schmierung des Lagerbockes gewährleisten. Der Kopf
eines Lagerbockes ist an der Unterseite eine Kupplungsplatte jeweils in einer Ausnehmung angeordnet
und muss allseitig beweglich gelagert sein. Allein schon
aus dieser Anforderung ergibt sich die Forderung nach einer guten Schmierung dieses Bereiches.

Die bisher üblichen unabhängig von einander angeordneten Schmiermittelzuführungen, einerseits zur Kupplungsplatte andererseits zum Lagerbock sind insofern unbefriedigend, als dadurch einerseits höhere Wartungskosten entstehen, andererseits bei Beschädigungen der freiliegenden Leitungen die Schmiermittelzufuhr nicht mehr gewährleistet werden kann.

Aufgabe der vorliegenden Erfindung ist es, ein Schmiersystem vorzuschlagen, bei dem gleichzeitig mit der Speisung der Schmiernuten an der Oberfläche der Kupplungsplatte der Kopf des Lagerbockes mitgeschmiert wird. Zudem soll die vorgeschlagene Lösung hinsichtlich Bearbeitungs-, Montage- und Materialaufwand eine Vereinfachung und Verbilligung bringen.

Diese Aufgabe wird erfindungsgemäss durch die Lehre des kennzeichnenden Teiles des Anspruches 1 gelöst.

Weitere erfindungsgemässe Merkmale ergeben sich aus den abhängigen Ansprüchen.

Die Erfindung wird nachfolgend anhand eines in den Figuren dargestellten Ausführungsbeispiels näher erläutert.

Es zeigen:

Fig. 1          einen Querschnitt durch eine erfindungsge-
                mässe Anordnung,

- 5 -

Fig. 2        einen Querschnitt durch eine andere Ausführungsform  und

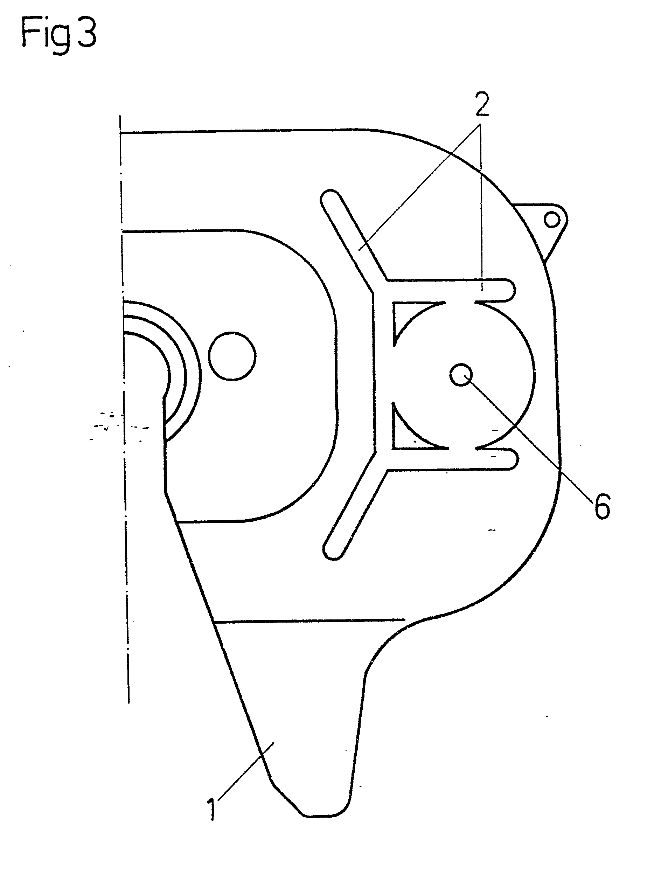

Fig. 3        eine Draufsicht auf eine Kupplungsplatte.

Die Kupplungsplatte 1 für eine erfindungsgemässe Sattelkupplung weist Schmiernuten und Vertiefungen in der Plattenoberfläche 1 a auf. Diese Schmiernuten dienen zur Aufnahme
eines Schmiermittels, um die Schmierung der gesamten Auflagefläche 1 a der Kupplungsplatte 1 zu gewährleisten. In
der Kupplungsplatte 1 ist eine Ausnehmung 3 angeordnet, in
der ein kugelkalottenförmiger Kopf eines Lagerbockes angeordnet ist. Der Kopf 4 des Lagerbockes muss in diesem
Einsatz allseitig bewegbar, und verdrehbar sein.

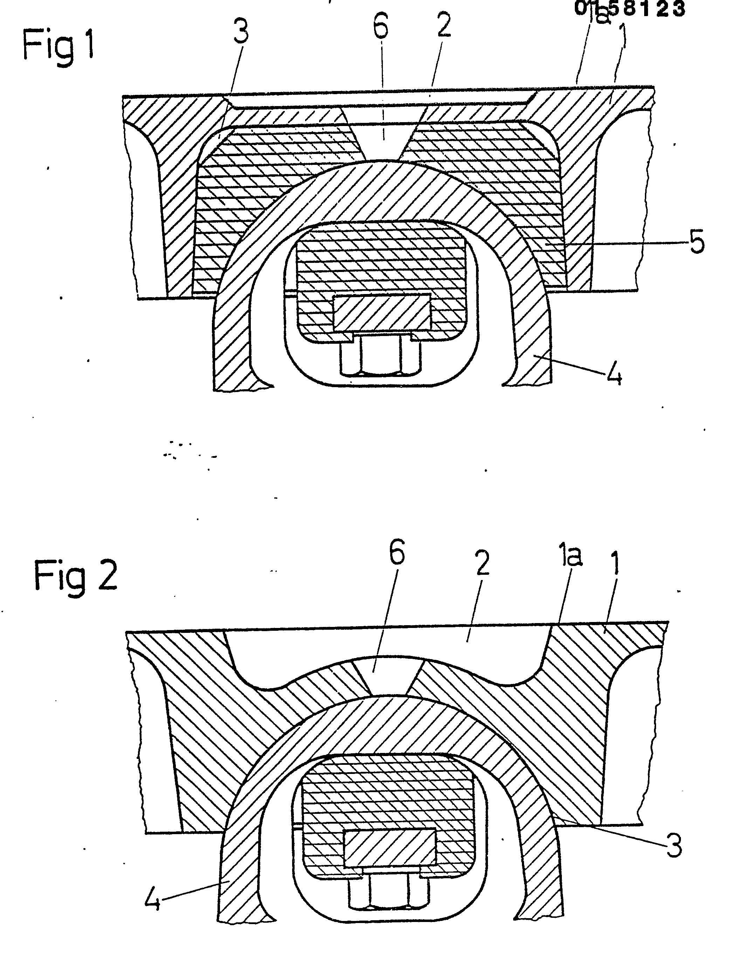

Daher gibt es verschiedene mögliche Anordnungsvarianten,
von denen zwei in der Fig. 1 und Fig. 2 dargestellt sind.
Die Fig. 1 zeigt eine Anordnung, bei der der Kopf 4 des
Lagerbockes in einem Einsatz 5 untergebracht ist. Dieser
Einsatz besteht vorzugsweise aus einem Material mit grosser
dämpfender Wirkung z.B. Kunststoff.

In der Variante nach der Fig. 2, ist die Unterseite der
Kupplungsplatte 1 so ausgebildet, dass eine formschlüssige
Verbindung zwischen dem Kopf 4 des Lagerbockes und der
Kupplungsplatte möglich ist.

In jenem Bereich der Schmiervertiefungen 2 der sich in etwa
über dem Scheitelpunkt des Kopfes 4 des Lagerbockes befindet,
ist eine Oeffnung 6 angeordnet. Diese Oeffnung 6 geht
durch die ganze gesamte Plattendicke und durch den Einsatz
5 durch, und schafft eine direkte Verbindung zwischen
Schmiernute und dem Lagerbock. Auf diese Weise kann das in der Schmiernut sich befindende Schmiermittel zum Kopf
des Lagerbockes durchfliessen, und die Schmierung des
gesamten kalottenförmigen Bereiches der formschlüssig
mit der Kupplungsplatte 1 oder mit dem Einsatz 5 verbunden
ist, gewährleisten. Die Oeffnung 6 ist vorzugsweise trichterförmig vorgesehen, um ein gewisses Speichervolumen zu schaffen, so dass der Nachschub des Schmiermittels sichergestellt
ist. Die trichterförmige Ausgestaltung ist herstellungsbedingt besonders günstig. Es kommt aber auch eine zylindrische
oder eine beliebige andere Form in Frage.

Die vorgeschlagene Sattelkupplung ermöglicht eine wirtschaftlichere Herstellung und Wartung und gewährleistet
die geforderte Betriebssicherheit.

P a t e n t a n s p r ü c h e

2429/FzT

1. Sattelkupplung mit einer Kupplungsplatte, die an ihrer Unterseite zu beiden Seiten je eine Ausnehmung, die zur Aufnahme des Kopfes eines Lagerbockes bestimmt ist, aufweist und in deren Oberfläche ein Schmiersystem vorsehbar ist, dadurch gekennzeichnet, dass je über dem Kopf des Lagerbockes mindestens eine Oeffnung angeordnet ist, die eine direkte Zuführung des Schmiermittels zum Kopf des Lagerbockes gewährleistet.

2. Sattelkupplung nach Anspruch 1, wobei zwischen der Unterseite der Kupplungsplatte und dem Kopf des Lagerbockes ein Einsatz angeordnet ist, dadurch gekennzeichnet, dass der Einsatz eine durchgehende Oeffnung aufweist.

3. Sattelkupplung nach Anspruch 2, dadurch gekennzeichnet, dass der plattenseitige Oeffnungsquerschnitt des Einsatzes und der Oeffnungsquerschnitt an der Unterseite der Kupplungsplatte gleich oder unterschiedlich sind.

4. Sattelkupplung nach Anspruch 1, dadurch gekennzeichnet, dass die Oeffnung in der Plattenoberfläche in einer Vertiefung bzw. Nut angeordnet ist.

5. Sattelkupplung nach Anspruch 4, dadurch gekennzeichnet, dass der Querschnitt der Oeffnung vom Boden der Vertiefung bzw. Nut bis zum Kopf des Lagerbockes abnimmt.

6. Sattelkupplung nach Anspruch 4, dadurch gekennzeichnet, dass die Oeffnung zylindrisch ist.

0158123

Fig 1

Fig 2

2429/FzT

0158123

Fig 3

2429 / FzT